Europäisches Patentamt

(19) European Patent Office

Office européen des brevets

(11) Veröffentlichungsnummer: **0 060 991**
**B1**

(12) **EUROPÄISCHE PATENTSCHRIFT**

(45) Veröffentlichungstag der Patentschrift:
18.07.84

(51) Int. Cl.³: **G 01 L 5/12**

(21) Anmeldenummer: **82100992.5**

(22) Anmeldetag: **11.02.82**

(54) **Vorrichtung zum Messen der Axialkraft in einer mittels Rollenlagern gelagerten Welle.**

(30) Priorität: **24.03.81 DE 3111434**

(43) Veröffentlichungstag der Anmeldung:
**29.09.82 Patentblatt 82/39**

(45) Bekanntmachung des Hinweises auf die Patenterteilung:
**18.07.84 Patentblatt 84/29**

(84) Benannte Vertragsstaaten:
**AT CH FR GB IT LI SE**

(56) Entgegenhaltungen:
**DE - A - 2 746 937**
**FR - A - 2 346 703**

**Zeitschrift "Wälzlagertechnik", 2/69, Seiten 30-33, "Axialkraftmessungen an axialelastischen FAG Rollenachslagern" von G. Supik**

(73) Patentinhaber: **Thyssen Industrie AG, Am Thyssenhaus 1, D-4300 Essen (DE)**
Patentinhaber: **SKF KUGELLAGERFABRIKEN GMBH, Ernst-Sachs-Strasse 2-8 Postfach 1440, D-8720 Schweinfurt (DE)**

(72) Erfinder: **Ruppert, Helmut, Simmershäuser Strasse 8, D-3500 Kassel (DE)**
Erfinder: **Frase, Dietmar, Sonnenstrasse 77, D-8721 Dittelbrunn (DE)**

**Beschreibung**

Die Erfindung bezieht sich auf eine Vorrichtung zum Messen der auf eine Welle wirkenden Axialkraft mittels Dehnungsmeßstreifen, wobei die Welle in zwei in Richtung der Wellenachse hintereinander angeordneten, je aus einem Rollenaußenring, einem Rolleninnenring und einer Wälzkörperreihe bestehenden Rollenlagern gelagert ist und wobei der Innenring des wellenseitigen Rollenlagers an einem Wellenabsatz anliegt und die Stirnflächen der Wälzkörper der lagerdeckelseitigen Wälzkörperreihe vom benachbarten Rollenlager mit bordlosem Innenring gegen einen auf der Welle angeordneten losen Bord- oder Winkelring abgestützt sind, insbesondere für Radsatzwellen von Schienenfahrzeugen im Fahrbetrieb.

Für Axialkraftmessungen an axialelastischen Rollenachslagern von Schienenfahrzeugen ist es bekannt, an beiden Stirnseiten der Achswelle je eine mit Dehnungsmeßstreifen versehene Kraftmeßdose anzuordnen (Zeitschrift »Wälzlagertechnik« 2/69, S. 30 bis 33). Hierbei ist jede Kraftmeßdose einerseits über eine Druckkappe, eine sich daran anschließende Kegelstumpf-Gummiringfeder, einen Druckring sowie einem Winkelring mit dem deckelseitigen Rollenlager und andererseits kraftschlüssig mit einem Schleifringkopf verbunden. Von der Druckkappe wird mit einer bestimmten Vorspannkraft über die Kegelstumpf-Gummiringfeder und den Druckring der Winkelring elastisch gegen die Stirnseite des bordringlosen Innenrings vom deckelseitigen Rollenlager gepreßt. Die Axialkraft wird hierbei von der Achslagerführung in das Lagergehäuse, von dort in den inneren Bordring des Außenrings vom deckelseitigen Rollenlager geleitet und weiter über dessen Wälzkörperreihe auf den Winkelring übertragen, der bei einer die Vorspannkraft der Kegelstumpf-Gummiringfeder überschreitenden Axialkraft axial verschoben wird bis seine Stirnfläche an der Druckkappe anliegt; anschließend erfolgt eine starre Übertragung der Axialkraft. Nachteilig ist bei dieser vorbekannten Ausführung, daß die Kraftmeßdosen mit ihren Dehnungsmeßstreifen nicht ständig im Krafthauptfluß, sondern auch im Kraftnebenfluß angeordnet sind, so daß die Meßstreifen nur mittelbar verformt werden und dadurch ein Signal erst nach Überschreiten einer bestimmten Vorspannkraft ausgelöst wird. Außerdem erfolgt der Kraftfluß an jeder Lagerstelle nur in eine Richtung und für die Unterbringung der Meßvorrichtung außerhalb des Achslagergehäuses ist ein erhöhter Platzbedarf, bei ohnehin schon beengten Raumverhältnissen, erforderlich.

Die der Erfindung zugrunde liegende Aufgabe besteht darin, bei einer Meßvorrichtung der im Oberbegriff des Hauptanspruchs genannten Gattung die Kraftmessung von störenden Einflüssen zu befreien sowie die axialen Schubkräfte in beiden Richtungen mit Maschinenelementen, die zusammen ein Minimum an Raum einnehmen und weniger kostspielig sind, aufzunehmen. Diese Aufgabe wird gemäß der Erfindung durch die im kennzeichnenden Teil des Hauptanspruchs angegebenen Merkmale gelöst.

Durch diese erfindungsgemäße Ausbildung wird erreicht, daß das bei den Meßvorrichtungen nach dem Stand der Technik für die Unterbringung von zur Meßvorrichtung gehörenden Teilen erforderliche, an der lagerdeckelseitigen Öffnung am Lagergehäuse zu befestigende topfartige Gehäuse entfallen kann. Insbesondere ergibt sich der Vorteil, daß die Meßvorrichtung trotz ihres sehr einfachen Aufbaus aus nur wenigen Einzelteilen eine sichere exakte Kraftübertragung ermöglicht, weil die Meßelemente jetzt in unmittelbarer Nähe der Krafteinleitung angeordnet sind. Trotz dieser wesentlichen Vereinfachung besitzt die Meßvorrichtung einen sehr kompakten Aufbau, da sich die zur Messung dienenden Bauteile im Inneren des Lagergehäuses befinden.

Schließlich sind auch die erforderlichen Zusatzteile äußerst unempfindlich gegen Defekte und Störungen untergebracht, so daß in der Regel zusätzliche Wartungskosten nicht entstehen. Außerdem können die Meßwertaufnehmer nach Beendigung der Messung in der Lagerung verbleiben, ohne den weiteren Betrieb zu stören. Darüber hinaus kann diese Meßvorrichtung nachträglich bei bereits in Betrieb befindlichen Wellenlagerungen ohne großen Aufwand in die Lagergehäuse eingebaut werden.

Vorteilhafte Weiterbildungen bzw. bevorzugte Ausführungsformen der Erfindung sind in den Unteransprüchen gekennzeichnet.

Ausführungsbeispiele der Erfindung sind in den Zeichnungen schematisch dargestellt und werden im folgenden näher beschrieben. Es zeigt

Fig. 1 einen Querschnitt der Wellenlagerung mit der erfindungsgemäßen Meßvorrichtung, bei der der zentrale Bordring mit dem Meßring und dieser mit den Außenringen der beiden Rollenlager formschlüssig verbunden sind;

Fig. 2 eine der Fig. 1 entsprechende Darstellung, jedoch mit einem einteiligen Bord-/Meßring, der mit einem zwischen den Außenringen der beiden Rollenlager angeordneten Distanzring formschlüssig verbunden ist;

Fig. 3 eine Ansicht eines zweiteiligen, zusammengeschraubten zentralen Bordrings mit dazwischen befindlichem Meßring, entsprechend Fig. 1 und 2.

Bei der dargestellten Wellenlagerung ist eine Welle 1 mit zwei Rollenlagern 2 und 3 in einem Lagergehäuse 4 abgestützt, das durch einen nicht näher bezeichneten Lagerdeckel nach außen verschlossen ist. Das wellenseitige Rollenlager 2 besitzt einen Innenring 5 mit einem festen Seitenbord, wogegen das lagerdeckelseitige Rollenlager 3 einen Innenring 6 ohne feste Seitenborde aufweist.

Die Außenringe 7 und 7' der beiden Rollenlager sind mit je einem festen Seitenbord versehen und zwischen Innen- und Außenring befindet sich jeweils eine Wälzkörperreihe 8, 8'. Der Innenring 5 vom wellenseitigen Rollenlager 2 liegt mit seiner Außenstirnfläche gegen einen Wellenabsatz 9 an und korrespondiert auf seiner Innenstirnfläche mit einem Distanzring 10, an den sich wiederum die Innenstirnfläche des Innenrings 6 ohne feste Seitenborde vom lagerdeckelseitigen Rollenlager 3 abstützt. Im Anschluß an dieses Rollenlager 3 ist auf der Welle 1 ein Winkelring 11 angeordnet, der mit seinem senkrecht zur Wellenachse x-x gerichteten Schenkel gegen die Außenstirnfläche des Innenrings 6 vom Rollenlager 3 gepreßt ist. An seinem sich parallel zur Wellenachse x-x erstreckenden Schenkel liegt die Wälzkörperreihe 8' mit ihrer Außenstirnfläche an. Die einander zugewandten Stirnflächen der Wälzkörper der beiden Wälzkörperreihen 8 und 8' stützen sich gegen einen zentralen Bordring 12 ab, der mit einem Meßring 13 verbunden ist. Der Meßring 13 besitzt einen sich vom Bordring 12 quer zur Wellenachse x-x erstreckenden Abschnitt 14, an den sich ein Abschnitt 15 mit beidseitigen Druckflächen 16, 16' anschließt. Der quer zur Wellenachse x-x angeordnete Meßringabschnitt 14 kann entweder aus einer im ganzen starren Metallscheibe oder aus mehreren, den zentralen Bordring mit dem Meßringabschnitt 15 verbindenden Gliedern, in Form von Speichen oder dergl., bestehen. Auf beiden Seiten des Meßringabschnitts 14 sind Dehnungsmeßstreifen 17, 17' angeordnet, die in verschiedenen Abständen zueinander und von der Wellenachse x-x befestigt werden können.

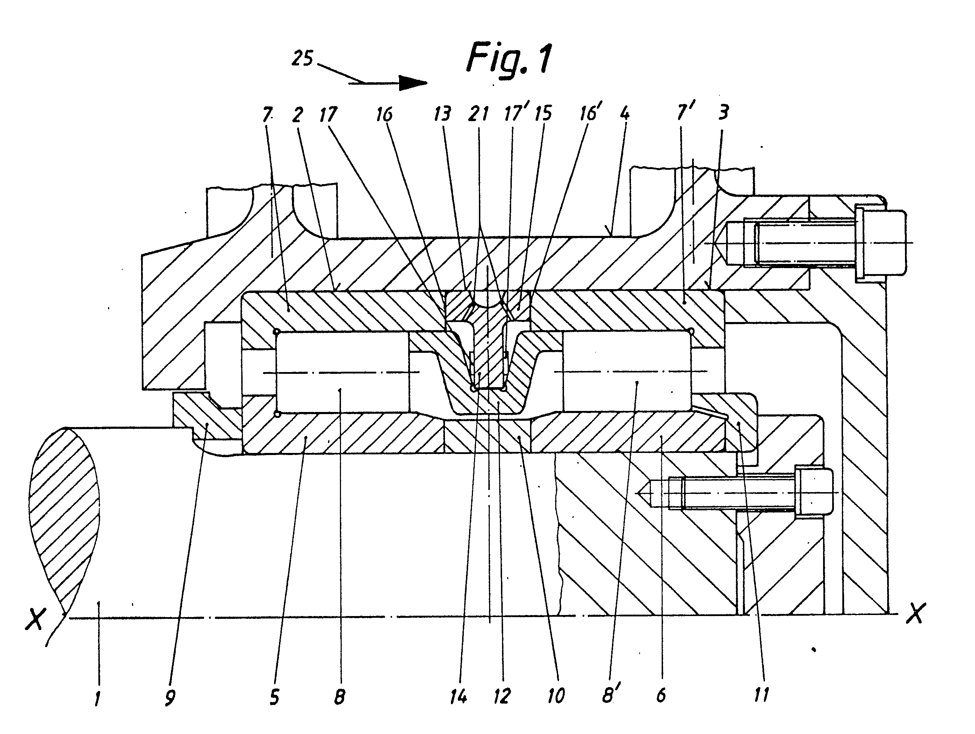

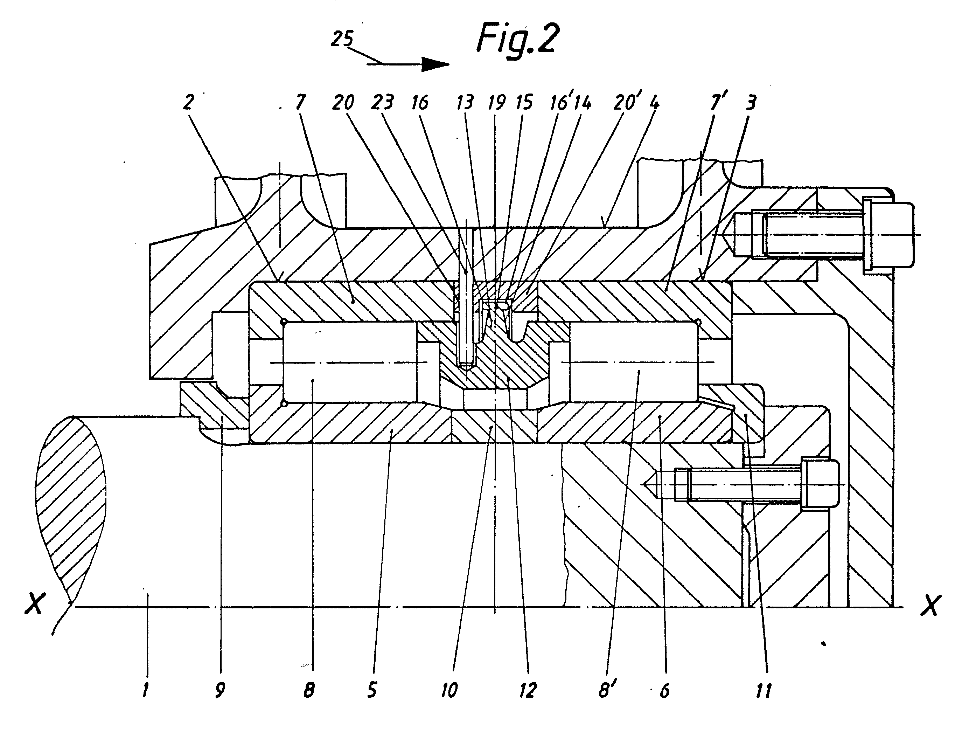

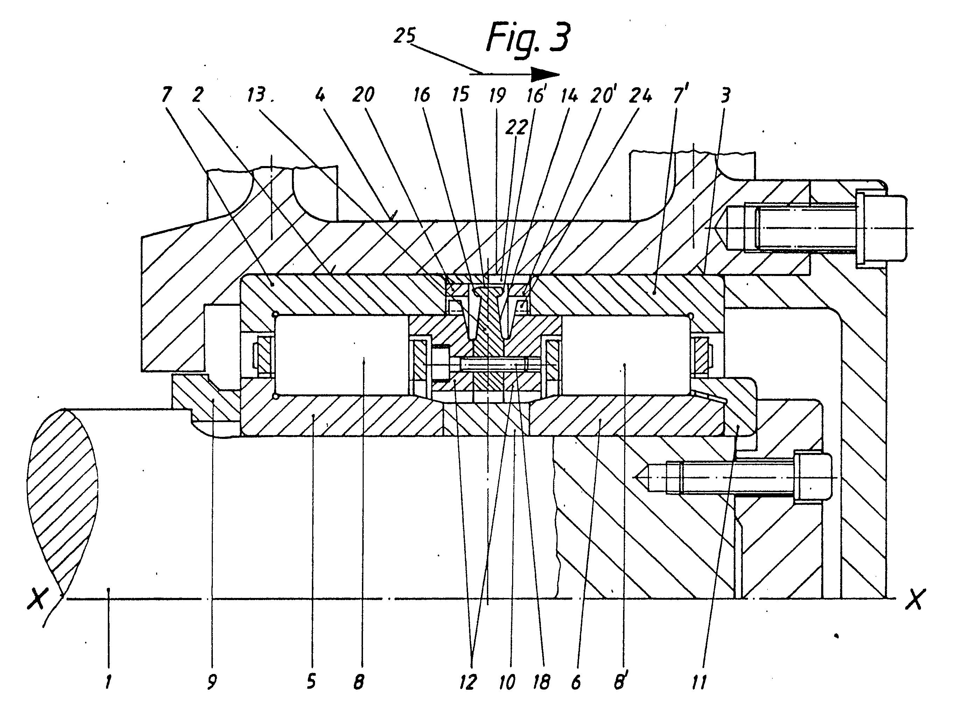

Bei den Ausführungsbeispielen nach Fig. 1 und 3 sind der zentrale Bordring 12 und der Meßring 13 selbständige Bauteile, im Gegensatz zum Ausführungsbeispiel nach Fig. 2, wo der zentrale Bordring 12 mit dem Meßring 13 aus einem Stück besteht. Gemäß Fig. 3 besteht der zentrale Bordring 12 aus zwei spiegelbildlich gleichen Abschnitten, die den Meßring 13 zwischen sich aufnehmen und durch mehrere gleichmäßig über den Umfang verteilte Spannbolzen 18 gegeneinander verspannt sind. Die zentralen Bordringe 12 können einen etwa U- bzw. trapezförmigen Querschnitt besitzen und die Meßringe 13 weisen durch die beidseitigen Druckflächen 16, 16' einen T-förmigen Querschnitt auf.

Nach Fig. 1 sind die Druckflächen 16, 16' vom Meßring 13 formschlüssig mit den gegenüberliegenden Stirnflächen der Außenringe 7, 7' der beiden Rollenlager 2 und 3 verbunden. Im Unterschied hierzu zeigen Fig. 2 und 3 Ausführungen, bei denen zwischen den Stirnflächen der Rollenlageraußenringe 7 und 7' je ein Abstandsring 19 mit beidseitig nach innen gerichteten Anschlagringen 20, 20' zwischengeschaltet ist, die mit den Druckflächen 16, 16' der Meßringe 13 formschlüssig verbunden sind.

Der zwischen den gegenüberliegenden Stirnflächen der beiden Rollenlageraußenringe 7 und 7' befindliche Meßringabschnitt 15 bzw. Abstandsring 19 ist mit Bohrungen 21 (Fig. 1) oder Aussparungen 22 (Fig. 3) versehen, durch die Verbindungskabel von den am Meßringabschnitt 14 befindlichen Dehnungsmeßstreifen 17, 17' zu einem nicht dargestellten Meßgerät geführt werden.

Um ein unbeabsichtigtes Drehen des zentralen Bordrings 12 gegenüber dem zwischen den gegenüberliegenden Stirnflächen der beiden Rollenlageraußenringe 7 und 7' befindlichen Abstandsring 19 zu vermeiden, können die Teile 12 und 19 entweder durch einen Stift 23 (Fig. 2) oder durch eine Verzahnung 24 (Fig. 3) gesichert sein.

Eine vom Wellenabsatz 9 auf den festen Seitenbord des Innenrings 5 vom Rollenlager 2 wirkende Axialkraft wird über die Wälzkörperreihe 8 auf den zentralen Bordring 12, weiter über den mit diesem korrespondierenden Meßring 13 und von diesem über den Außenring 7' des lagerdeckelseitigen Rollenlagers 3 von dessen festem Seitenbord auf das Lagergehäuse 4 übertragen.

Hierbei wird der zentrale Bordring 12 mit dem korrespondierenden Meßring 13 in Richtung des Pfeils 25 bewegt, bis die Druckfläche 16' vom Meßringabschnitt 15 gegen den Anschlagring 20' des Abstandsrings 19 bzw. gegen die Innenstirnfläche des Außenrings 7' vom Rollenlager 3 anliegt. Der quer zur Wellenachse x-x verlaufende Meßringabschnitt 14 wird von der über dem zentralen Bordring 12 einwirkenden Kraft ebenfalls in Pfeilrichtung 25 gebogen, wobei die beidseitig an ihm befestigten Dehnungsmeßstreifen 17, 17' die auftretenden Schubspannungen in bekannter Weise erfassen. Bei einer vom Winkelring 11 auf die Wälzkörperreihe 8' eingeleiteten Axialkraft gelangt diese auch über den zentralen Bordring 12 sowie den Meßring 13, die aber entgegen der Richtung des Pfeils 25 bewegt werden, weiter auf den Außenring 7 des wellenseitigen Rollenlagers 2 und über dessen festen Seitenbord auf das Lagergehäuse 4.

Die Erfindung ist nicht auf die dargestellten und beschriebenen Ausführungsbeispiele beschränkt. Alternativ ist es auch möglich, die Innenringe 5, 6 der beiden Rollenlager 2 und 3 so zu verlängern, daß ihre gegeneinander gerichteten Stirnflächen stumpf aneinanderstoßen und der Distanzring 10 entfallen kann.

**Patentansprüche**

1. Vorrichtung zum Messen der auf eine Welle (1) wirkenden Axialkraft mittels Dehnungsmeßstreifen (17, 17'), wobei die Welle in zwei in Richtung der Wellenachse (x-x) hintereinander angeordneten, je aus einem Rollenaußenring (7 bzw. 7'), einem Rolleninnenring (5 bzw. 6) und einer Wälzkörperreihe (8 bzw. 8') bestehenden Rollenlagern (2 bzw. 3) gelagert ist und wobei der Innenring (5) des wellenseitigen Rollenlagers (2) an einem Wellenabsatz (9) anliegt und die Stirnflächen der Wälzkörper der lagerdeckelseitigen Wälzkörperreihe (8') vom benachbarten Rollenlager (3) mit bordlosem Innenring gegen einen auf der Welle (1) angeordneten losen Bord- oder Winkelring (11) abgestützt sind, insbesondere für Radsatzwellen von Schienenfahrzeugen im Fahrbetrieb, dadurch gekennzeichnet, daß

a) die einander zugekehrten Stirnflächen der Wälzkörper der beiden Wälzkörperreihen (8 und 8') an einem zentralen kraftübernehmenden Bordring (12) abgestützt sind, der unter Krafteinwirkung in Kraftrichtung bewegbar ist;

b) sich zwischen dem zentralen Bordring (12) und den beiden einander im Durchmesser gegenüberliegenden Stirnflächen der Außenringe (7, 7') bzw. Innenringe (5, 6) ein Meßring (13) befindet, dessen quer zur Wellenachse (x-x) angeordneter Abschnitt (14) mit dem zentralen Bordring (12) in Wirkverbindung steht und mit den Dehnungsstreifen (17, 17') versehen ist;

c) der Meßring (13) an seinem dem zentralen Bordring (12) abgewandten Abschnitt (15) mittels beidseitiger Druckflächen (16, 16') mit den gegenüberliegenden Stirnflächen der Außenringe (7, 7') bzw. Innenringe (5, 6) formschlüssig verbunden ist.

2. Vorrichtung nach Anspruch 1, dadurch gekennzeichnet, daß zwischen die Druckflächen (16, 16') und die Stirnflächen der Außenringe (7, 7') bzw. Innenringe (5, 6) ein Abtastring (19) mit beidseitigen Anschlagringen (20, 20') geschaltet ist, wobei der Abstandsring (19) und der zentrale Bordring (12) durch an sich bekannte Elemente fest miteinander verbunden und gegen unbeabsichtigtes Drehen gesichert sind.

3. Vorrichtung nach Anspruch 1 oder 2, dadurch gekennzeichnet, daß der zentrale Bordring (12) und der Meßring (13) je einteilig ausgebildet und formschlüssig miteinander verbunden sind.

4. Vorrichtung nach Anspruch 1 oder 2, dadurch gekennzeichnet, daß der zentrale Bordring (12) aus zwei scheibenförmigen, mittels Spannbolzen (18) gegeneinander verspannbaren Teilen besteht, zwischen denen sich der Meßring (13) befindet.

5. Vorrichtung nach Anspruch 1 oder 2, dadurch gekennzeichnet, daß der zentrale Bordring (12) und der Meßring (13) aus einem Stück bestehen.

6. Vorrichtung nach den Ansprüchen 1 bis 5, dadurch gekennzeichnet, daß der zentrale Bordring (12) einen U- bzw. trapezförmigen Querschnitt aufweist, wobei die beiden Endabschnitte nach außen gebogen sind und Flanken bilden.

7. Vorrichtung nach den Ansprüchen 1 bis 6, dadurch gekennzeichnet, daß der sich quer zur Wellenachse (x-x) erstreckende Meßringabschnitt (14) aus einer Scheibe oder aus mehreren Bindegliedern in Form von Speichen besteht.

## Claims

1. A device for measuring by means of strain gauges (17, 17') the axial force acting on a shaft (1) supported by two roller bearings (2 and 3, respectively) arranged adjacent to each other in the direction of the shaft axis (x-x), consisting of one outer ring (7 or 7'), one inner ring (5 or 6) and one row of rolling elements (8 or 8') each, wherein the inner ring (5) of the shaft-side roller bearing (2) rests against a shaft shoulder (9) and the rolling element end faces of the cap-side row of rolling elements (8') are supported by the adjacent roller bearing (3) having a flangeless inner ring for acting against a loose flanged ring or thrust collar (11), in particular for axles of axleboxes for rail vehicles, characterized in that

a) the opposing rolling element end faces of the two rows of rolling elements (8 and 8') are arranged to act against a central force-receiving flanged ring (12) which is displaceable under the action of a force in the direction of that force;

b) a measuring (13) is located between the central flanged ring (12) and the two opposing faces of the outer rings (7, 7') or inner rings (5, 6), of which measuring ring a portion (14) extending transversely to the shaft axis (x-x) operatively cooperates with the central flanged ring (12) and is provided with the strain gauges (17, 17');

c) the bearing surface areas (16, 16') on both sides of the measuring ring (13) are positively connected at that portion (15) which is remote from the central flanged ring (12) with the opposing faces of the outer rings (7, 7') or inner rings (5, 6).

2. A device according to claim 1, characterized in that a spacer ring (19) with stop rings (20, 20') on both sides is arranged between the bearing surface areas (16, 16') and the faces of the outer rings (7, 7') or inner rings (5, 6), the spacer ring (19) and the central flanged ring (12) are firmly attached to each other by means of known elements in order to prevent unintentional relative rotational motion between them.

3. A device according to claim 1 or 2, characterized in that the central flanged ring (12) and the measuring ring (13) are each made of one piece and are positively connected with each other.

4. A device according to claim 1 or 2, characterized in that the central flanged ring (12) is comprised of two disc-shaped members braced against each other by means of clamping bolts (18) and holding between them the measuring ring (13).

5. A device according to claim 1 or 2, characterized in that the central flanged ring (12) together with the measuring ring (13) is one piece.

6. A device according to claims 1 to 5, characterized in that the central flanged ring (12) has a U-shaped or trapezoidal cross-section, and wherein the two end portions are bent outwardly and form the sides.

7. A device according to claims 1 to 6, characterized in that the measuring ring portion (14) extending transversely to the shaft axis (x-x) is comprised of a disc or a number of connection members in the form of spokes.

## Revendications

1. Dispositif pour mesurer, à l'aide de jauges de contraintes (17, 17'), l'effort axial agissant sur un arbre (1) monté sur deux roulements à rouleaux (2 et 3) disposés l'un à côté de l'autre direction de l'axe de l'arbre (x-x), chacun comprenant une bague extérieure (7 ou bien 7'), une bague intérieure (5 ou bien 6) et une rangée d'éléments roulants (8 ou bien 8'), la bague intérieure (5) du roulement à rouleaux (2) côté arbre s'appliquant contre un épaulement (9) de l'arbre et les extrémités des éléments roulants de la rangée d'éléments roulants (8') côté couvercle du roulement à rouleaux (3) adjacent avec bague intérieure sans épaulement étant supportées par une bague épaulée ou bague-cornière (11) détachée disposée sur l'arbre (1), particulièrement pour des essieux de véhicules ferroviaires, caractérisé par le fait que

a) les extrémités des éléments roulants opposées des deux rangées d'éléments roulants (8 et 8') sont supportées par une bague épaulée centrale (12) absorbant l'effort, cette bague épaulée centrale étant déplaçable sous l'action de l'effort en direction de cet effort;

b) une bague de mesurage (13) se trouve disposée entre la bague épaulée centrale (12) et les deux faces opposées des bagues extérieures (7, 7') ou bagues intérieures (5, 6), bague de mesurage dont la partie (14) s'étendant transversalement à l'axe de l'arbre (x-x) coopère activement avec la bague épaulée centrale (12) et est munie de jauges de contraintes (17, 17');

c) la partie (15) de la bague de mesurage (13), avec son côté détourné de la bague épaulée centrale (12), coopère par l'intermédiaire des surfaces de pression (16, 16') disposées des deux côtés de cette partie (15) avec entraînement positif avec les faces opposées des bagues extérieures (7, 7') ou bagues intérieures (5, 6).

2. Dispositif suivant la revendication 1, caractérisé par le fait qu'il se trouve disposée entre les surfaces de pression (16, 16') et les faces des bagues extérieures (7, 7') ou bagues intérieures (5, 6) une bague intercalaire (19) avec de bagues d'arrêt (20, 20') disposées des deux côtés, la bague intercalaire (19) et la bague épaulée centrale (12) étant fermement jointes par des éléments de fixation connus pour éviter un mouvement de rotation inopiné de l'une par rapport à l'autre.

3. Dispositif suivant la revendication 1 ou 2, caractérisé par le fait que la bague épaulée centrale (12) et la bague de mesurage (13) sont chacune en une pièce et coopèrent avec entraînement positif.

4. Dispositif suivant la revendication 1 ou 2, caractérisé par le fait que la bague épaulée centrale (12) se compose de deux pièces en forme de disque coincées l'une par rapport à l'autre à l'aide de boulons de tension (18) et recueillant entre elles la bague de mesurage (13).

5. Dispositif suivant la revendication 1 ou 2, caractérisé par le fait que la bague épaulée centrale (12) forme une seule pièce avec la bague de mesurage (13).

6. Dispositif suivant les revendications 1 à 5, caractérisé par le fait que la bague épaulée centrale (12) à un profil en U ou trapézoïdal, les deux bouts étant pliés vers l'extérieur et formant de flancs.

7. Dispositif suivant les revendications 1 à 6, caractérisé par le fait que la partie (14) de la bague de mesurage, s'étendant transversalement à l'axe de l'arbre (x-x), se compose d'une rondelle ou de plusieurs éléments de jonction en forme de rayons.

# Fig. 1

**Fig.2**

25    *Fig. 3*

7   2    13    4   20    16   15   19   16'   14   20'   24   7'   3

22

X      X

1     9     5   8     12   10   18   6   8'     11

0 060 991

11